# EUROPEAN PATENT SPECIFICATION

(11) **EP 4 051 642 B1**
(45) Date of publication and mention of the grant of the patent: **07.06.2023**
(21) Application number: 20804362.0
(22) Date of filing: 02.11.2020
(51) Int. Cl.: C02F 1/461, C02F 1/46, C02F 1/32, C02F 1/44, C02F 101/30, C02F 101/32

(54) **WASTE WATER CLEANING APPARATUS AND SYSTEM**
ABWASSERREINIGUNGSGERÄT UND SYSTEM
SYSTÈME ET APPAREIL DE NETTOYAGE D'EAUX USÉES

(30) Priority: 31.10.2019 NL 2024131
(43) Date of publication of application: 07.09.2022
(73) Proprietor: JOINING MINDS SOLUTIONS, 1098 XH Amsterdam (NL)
(72) Inventor: BELAKOVS, Voldemars, 2861 CM Bergambacht (NL)
(74) Representative: Arnold & Siedsma
(86) International application number: PCT/NL2020/050681
(87) International publication number: WO 2021/086194

(56) References cited:
- WO-A1-2014/195519
- US-A- 3 402 120
- US-A- 4 957 606
- US-A- 5 037 524
- US-A1- 2014 017 754
- US-A1- 2016 120 013
- US-A1- 2017 283 705
- US-A1- 2017 327 390
- US-A1- 2018 230 027

## Description

The present invention relates to a waste water cleaning apparatus and system comprising the same. The invention particularly relates to a waste water cleaning apparatus making use of a plasma-hydraulic shock wave generator. Described is also a waste water cleaning apparatus and system comprising the same making use of an electro-hydraulic shock wave generator.

Using plasma to clean waste water is known. For example, the paper entitled "Perspectives on the Interaction of Plasmas With Liquid Water for Water Purification", by Foster et al, IEEE transactions on plasma science, Vol. 40, No. 5, May 2012, pp. 1311-1323, discloses a technique for purifying water in which plasmas are produced in isolated underwater bubbles via a pulsed electric field that is applied using electrodes.

A disadvantage of the abovementioned technique is that only waste water in the near vicinity of the electrodes can be cleaned by the system. The chemical radicals created by the electric discharges are very reactive, so they will react very quickly with the contaminants. Therefore, contaminants positioned further away from the electrodes will not be cleaned. Further examples of known apparatuses and systems relying on plasma for waste water treatment are US 5 037 524 A and US 4 957 606 A.

It is an object of the present invention to obviate or at least reduce the problems of the known systems. This object is achieved by a waste water cleaning apparatus for cleaning waste water with shockwaves as defined in claim 1, which comprises a reactor body that stretches out between opposing ends and comprising a first water inlet and a first water outlet, and a plasma-hydraulic shock wave generator comprising a pair of plasma pencils. Each plasma pencil is mounted to a respective end among said opposing ends. Furthermore, each plasma pencil comprises an elongated core configured to form a cathode of the plasma pencil, an elongated insulating sleeve that is provided coaxially around the elongated core, and an elongated metallic sleeve that is provided coaxially around the elongated insulating sleeve and that is configured to form an anode of the plasma pencil. Each plasma pencil has a tip part that is arranged inside the reactor body. This tip part is formed by a part of the elongated core extending in longitudinal direction out of the insulating sleeve, and a part of the insulating sleeve extending in longitudinal direction out of the metallic sleeve.

The waste water cleaning apparatus further comprises a voltage pulse generator connected, for each plasma pencil, to the anode and to the cathode, wherein the voltage pulse generator is configured to generate an electric field between the anode and the cathode having a strength exceeding 40 kV/m and wherein a power density at each cathode exceeds 4 kW/cm², as a result of which a plasma is created around the part of the elongated core that extends out of the insulating sleeve, wherein the plasma generates shock waves.

Within the context of the present invention, a plasma-hydraulic shock wave generator comprises a voltage pulse generator and a pair of plasma pencils connected to the voltage pulse generator.

By providing a reactor body comprising a first water inlet and a first water outlet, the waste water can go into the reactor body of the waste water cleaning system through the first inlet. The waste water coming through the first inlet still contains a plurality of contaminants. When the waste water has been cleaned, the waste water can go out of the reactor body through the first outlet. The waste water coming through the first outlet will contain less contaminants than the waste water coming in through the first inlet. This provides an efficient go-through of the waste water through the waste water cleaning system. Preferably, the reactor body is completely filled with waste water during use. When the waste water cleaning system is in use, the waste water present in the reactor body must at least be partially conductive.

By providing a plasma shock wave generator the waste water cleaning system is able to produce a plasmoid around the part of the cathodic core that extends out of the insulating sleeve and is able to generate shock waves. The Applicant, not wishing to be bound by theory, has found that shock waves are generated when a plasmoid is created around the core. When a pulse is provided by the voltage pulse generator, first the core heats up due to Joule heating. This achieves a water vapor envelope around the core that extends out of the insulating sleeve. Due to the specific configuration of the plasma pencil wherein the insulating sleeve is set back from the core and the metallic sleeve is set back from the insulating sleeve, pinching occurs at the tip of the core. When a high enough field strength is provided, so-called non-transferrable arc discharges between the core and the metallic sleeve will induce a plasmoid at the tip of the core. Due to this plasma a rapid rise in temperature is achieved that leads to thermolysis of the water resulting in a rapid rise in volume of the water. As the pulse is cut off, the plasmoid will disintegrate thereby causing an implosion as the decomposed water will recombine. This implosion generates the shock waves that subsequently clean the contaminants in the waste water.

Contrary to a transferable electric arc, which relies on thermionic emission of electrons from both the core and metallic sleeve, for a non-transferrable plasma arc, a part of the thermionic emission of electrons is from the core and the remaining charge carriers are produced by secondary electron emission near the metallic sleeve having pores in the self-healing oxide layer. An advantage of inducing the non-transferrable plasma arc is that temperatures of 5,000 °C can be reached, thereby obtaining a very effective thermolysis of the water. A further consequence of the non-transferrable plasma arc is that multiple arcs can be created at the same time, instead of only one in the case of a transferrable plasma arc. These multiple non-transferrable plasma arcs induce, at the tip of the core, the creation of the plasmoid. Another advantage of the non-transferrable plasma-arc is that corrosion of the core and the metallic sleeve are reduced.

The Applicant has found that when the created shock waves have a sufficient speed and/or energy, they are able to clean contaminants in the waste water. More in particular, the Applicant has found that waste water cleaning can be obtained at positions relatively remote from the electrodes of the shock wave generator. According to the invention, the shock waves are not used as a byproduct but as an energy carrier. When a shock wave travels through the waste water, the shock wave will encounter contaminants. These contaminants produce a density difference with respect to the surrounding water. Consequently, the contaminants have a different acoustic impedance than the acoustic impedance of the medium, e.g. water, through which the shock wave propagates. At the interface between these different acoustic impedances, the shock wave will release its energy resulting in the formation of nano-plasmas at the surface of the contaminants. These nano-plasmas then produce chemical radicals, such as OH, which subsequently react with the contaminant and thereby clean the waste water.

The Applicant has further found that the waste water cleaning system has another advantage when the shock waves have sufficient speed and/or energy. Another effect from the nano-plasmas is that they also produce shockwaves, so-called secondary shock waves. The advantageous property of these secondary shock waves is that they drive the shock wave produced as a result of the electric discharge, the so-called primary shock wave. Via this mechanism wherein the primary shock wave is driven by the secondary shock waves, the primary shock wave can penetrate deep into the waste water, and thus also clean waste water remote from the shock wave generator. This has the advantage that the waste water in the whole reactor body will be cleaned, instead of only the waste water in the vicinity of the plasma-hydraulic shock wave generator.

The plasma pencils may be removably attached to the ends of the reactor body. For example, each end of the reactor body may be provided with an opening through which a respective plasma pencil extends. In this case, for each plasma pencil, the metallic sleeve may comprise an outer thread, wherein the opening of the end of the reactor body to which the plasma pencil is mounted can be provided with an inner thread, and wherein the plasma pencil is removably attached to the reactor body by means of the outer thread cooperating with the inner thread.

Preferably an end of the metallic sleeve is provided with an outer thread, wherein at least the part of the metallic sleeve directly adjacent to the outer thread has a diameter greater than the outer thread. This has the advantage that when the plasma pencil is screwed into the opening of the reactor body, the part of the sleeve directly adjacent to the outer thread will abut the wall of the end surrounding the opening. This realizes a liquid-tight connection between the plasma pencil and the opening, thereby preventing waste water to escape from the reactor body.

The ends of the reactor body can be removably attached to a remainder of the reactor body, preferably with a tri-clamp. The plasma pencils are subjected to extreme conditions. The temperature of the waste water surrounding the elongated core can be as high as 6000 °C. Next to this, shock waves of Mach 4 are produced near the plasma pencil. An advantage of the plasma pencils being removably attached is that they can easily be replaced by a new plasma pencil. More in particular, it is convenient to have the ends removably attached to a remainder of the reactor body, and the plasma pencils removably attached to the ends. In this manner, the plasma pencils, or parts thereof, can be easily replaced.

The insulator sleeve is made of ceramic material, preferably mono-crystalline sapphire. The ceramic material should be able to withstand the high temperatures and electric fields during operation. An advantage of ceramic material and of mono-crystalline sapphire in particular is that it is sufficiently insulating such that the elongated core and the metallic sleeve are electrically isolated from each other. A further advantage ceramic material and of mono-crystalline sapphire is that it can withstand the shock waves generated by the plasma.

The metallic sleeve comprises a metal that, during operation, forms a self-healing porous metallic oxide layer on its surface. Such metals are aluminum and/or titanium. The porous oxide layer on the surface of the metallic sleeve has as its effect that a non-transferrable arc occurs between the cathodic core and the metallic sleeve. This ensures that a plasma is obtained at the core that extends out of the insulating sleeve.

In a preferred embodiment according to the invention, the end points of the core and the metallic sleeve are sharp, i.e. comprise an edge or a point. This enhances the electrical breakdown.

A first distance along which the elongated core extends out of the insulating sleeve can be in the range of 0. 1 - 4 cm, preferably in the range of 0.2 - 2 cm, and most preferably in the range of 0.4 - 1 cm, and/or a second distance along which the insulating sleeve extends out of the metallic sleeve can be in the range of 0.1 - 4 cm, preferably in the range of 0.3 - 2 cm, and most preferably in the range of 0.5 - 1 cm.

In general, the first and second distance depend on the radius of the elongated core. The exposed area of the elongated core should be such that a power density of at least 4 kW/cm² is achieved. Accordingly, when the radius of the core is designed to be smaller, the first distance must increase to still reach the same power density with a given power being supplied to the plasma pencil.

In a preferred embodiment according to the invention the surface area of the part of the core extending out of the metallic sleeve is 1 cm². In an example the first distance can then be 0.54 cm if the diameter of the core is 0.48 cm. The second distance can for example be 10 mm. In this way a power density of 4k kW/cm² can be effectively achieved.

Pulses of the voltage pulse generator may be provided at a frequency such that a ratio between a speed of the shock waves to the product of the frequency and a distance between the plasma pencils lies in a range between 0.1 and 1, more preferably between 0.2 and 0.7, and most preferably between 0.3 and 0.5. The Applicant has found that when the frequency is adjusted to the abovementioned ratio, the shock waves will acquire an enhanced constructive interference at the center, thereby increasing the cleaning of the waste water in the reactor body.

The reactor body can be electrically connected to the elongated metallic sleeve. During operation the reactor body and/or metallic sleeve can be grounded and a negative pulse may be applied to the cathode.

The elongated core comprises tungsten as this metal is able to withstand high temperatures.

The electric field strength may be larger than 60 kV/m, and may preferably be larger than 80 kV/m.

The power density at each anode may exceed 6 kW/cm², and may preferably exceed 8 kW/cm².

The reactor body may have a symmetry line, and each plasma pencil may be positioned substantially along the symmetry line of the reactor body. Each elongated core may have a cylindrical shape, such as a rod shape. The plasma pencils may be arranged in the reactor body such that, for each plasma pencil, its longitudinal axis is parallel to and preferably coincides with said symmetry line of the reactor body.

The reactor body may have an elongated hollow main part and the ends may close off the elongated main part at opposing ends thereof. Furthermore, the elongated hollow main part may be cylindrically shaped. Additionally or alternatively, the reactor body can be substantially made of stainless steel and/or plastic.

Pulses of the voltage pulse generator may be provided at a frequency higher than 250 Hz, more preferably higher than 1 kHz, and even more preferably higher than 5 kHz. A duty cycle of the voltage pulse generator can be in a range of 20 - 80%, more preferably in a range of 30 - 70%, and most preferably in a range of 40 - 60%.

According to a second aspect, the present invention further provides a plasma pencil that is configured to be used in a waste water cleaning apparatus as defined above. This plasma pencil as defined in claim 14 comprises an elongated core configured to form a cathode of the plasma pencil, an elongated insulating sleeve that is provided coaxially around the elongated core, and an elongated metallic sleeve that is provided coaxially around the elongated insulating sleeve and that is configured to form an anode of the plasma pencil. Each plasma pencil has a tip part that is arranged inside the reactor body, said tip part being formed by a part of the elongated core extending in longitudinal direction out of the insulating sleeve, and a part of the insulating sleeve extending in longitudinal direction out of the metallic sleeve.

According to a third aspect, the present invention further provides a waste water cleaning system as defined in claim 15, comprising an apparatus as described above, and a nano-filtration system comprising a second water inlet and a second water outlet, wherein the second water inlet is connected with the first water outlet and wherein the second water outlet is configured to output waste water that has been cleaned by said waste water cleaning system. The system further comprises a pump for pressurizing the waste water to be cleaned by the waste water cleaning system at a pressure in a range of 2.5 - 6.5 bar, more preferably in a range of 3.5 - 5.5 bar, and most preferably at a pressure in a range of 4 - 5 bar.

Described is also (not being however part of the present invention) a waste water cleaning apparatus for cleaning waste water with shock waves, comprising a container having a first water inlet and a first water outlet, and a plasma-hydraulic shock wave generator comprising a pair of anodes that are arranged opposite to each other in the container. The plasma-hydraulic shock wave generator further comprises a cathode that substantially surrounds and is spaced apart from the pair of anodes and wherein a surface area of the anodes is less than a surface area of the cathode, and a voltage pulse generator connected to the pair of anodes and to the cathode, and wherein the voltage pulse generator is configured to generate an electric field between the pair of anodes and cathode having a strength exceeding 40 kV/m and wherein a power density at each anode exceeds 200 W/cm², as a result of which a plasma-envelope is created around the anode that generates shock waves.

The abovementioned generation of shock waves can be achieved if pulses of the voltage pulse generator are provided at a frequency higher than 1 kHz, more preferably higher than 10 kHz, and even more preferably higher than 20 kHz. A duty cycle of the voltage pulse generator ism preferably in a range of 20 - 80%, more preferably in a range of 30 - 70%, and most preferably in a range of 40 - 60%.

By providing anodes that are positioned opposite to each other, shock waves are created on opposite sides of a container and sent towards each other. This has the additional advantage that in the center of the container the energy density of the individual shock waves will acquire constructive interference. This increases the energy density of the shock wave at the position of interference, and thereby increases the effectiveness of cleaning of contaminations with the shock wave.

Another advantage of the plasma-hydraulic shock wave generator is that due to the plasma, heat is generated in the container by burning the carbohydratic contaminants therein. This excess of heat by the burning of the contaminants could for example be extracted by a cooling system around the container.

In this described embodiment the electric field strength is larger than 60 kV/m, preferably larger than 80 kV/m.

By providing the abovementioned electric field strengths, the plasma-hydraulic shock wave generator creates shock waves with a sufficient energy and/or speed to create the abovementioned nano-plasmas. The Applicant has found that a minimum speed a shock wave needs to have in order to create nano-plasmas at the contaminants is between Mach 3 and 4. Experiments have shown that an electric field strength above 40 kV/m achieves this result.

In this described embodiment, the power density at each anode exceeds 300 W/cm², and preferably exceeds 400 W/cm².

By providing the abovementioned power densities at each of the pair of anodes the plasma envelope around the anode can be formed, thereby generating shock waves.

In this described embodiment, a conductive wall of the container forms the cathode, the plasma-hydraulic shock wave generator further comprising a pair of insulators, each insulator being arranged in between the cathode and a respective anode among the pair of anodes.

By providing an insulator between the respective anode and the cathode a sufficient electric field can be supplied between the respective anode and the cathode. Especially when a conductive wall of a container forms the cathode, the container needs to be electrically separated from the anode.

In this described embodiment, for each anode, a ratio of a surface area of the cathode to a surface area of the anode is larger than 5, preferably larger than 10, and most preferably larger than 20.

By providing the abovementioned ratio the electric field provides the ability to create a sufficiently dense electric field near the anodes, thereby generating the vapor gaseous envelope and subsequently the plasma envelope around the anodes.

In this described embodiment, the insulator is substantially made of a ceramic material, preferably aluminum oxide.

Experiments have shown that a ceramic insulator, preferably made of aluminum oxide, has a sufficiently high critical field strength to withstand electrical breakdown from occurring between the anodes and the cathode while at the same time being capable of withstanding the high temperatures that are reached during operation.

In this described embodiment, the container has a symmetry line, and each anode of the shock wave generator is positioned substantially along the symmetry line of the container.

By positioning the electrodes of the plasma-hydraulic shock wave generator substantially along a symmetry line of the container, the shock waves created by electric discharges are able to clean as many contaminants as possible. The symmetry line is the position in the container where the plasma-hydraulic shock wave generator is surrounded by the greatest amount of waste water, and is therefore able to clean the greatest amount of waste water. Furthermore, the walls of the container will reflect at least part of the shock waves.

In this described embodiment, each anode has an elongated shape, preferably a cylindrical shape, such as a rod shape.

Each anode having an elongated shape, preferably a cylindrical shape, an homogeneous electric field can be applied. This provides that the vapor gaseous envelope, and in later stages of the cleaning process the plasma envelope, can be reliably formed around the anode.

In this described embodiment, the pair of anodes is arranged in the container such that, for each anode, a longitudinal axis is parallel to and preferably coincides with said symmetry line.

By providing the pair of anodes parallel to and coinciding with the symmetry line, the shock waves created near the pair of anodes have sufficient freedom to move in all directions, thus cleaning waste water efficiently in all directions.

In this described embodiment, the container is cylindrically shaped and the anodes of the plasma-hydraulic shock wave generator are substantially positioned at respective ends to the container.

Experiments have shown that, especially in combination with the embodiment where the container is the cathode, an effective waste water cleaning system is achieved. This is achieved because the electric field lines can stretch out radially from the container to the anode, thereby providing a plasma envelope on the whole circumference of the anode. Alternatively or additionally, by positioning the anodes at respective ends of the container, the shock wave scan travel through a substantial part of the container, while in the center of the container acquiring constructive interference.

In this described embodiment, the anodes are substantially made of tungsten, or an alloy thereof.

Experiments have shown that tungsten, or an alloy thereof, have the desired characteristics to form a plasma envelope. In particular, tungsten, or an alloy thereof, has a sufficient heat resistance to the heat generated by the electric field. By using tungsten, or an alloy thereof, for the anodes, the plasma-hydraulic shock wave generator acquires a longer lifespan.

Described is also (not being however part of the present invention) a waste water cleaning apparatus for cleaning waste water with shockwaves, comprising a container comprising a first water inlet and a first water outlet, and an plasma-hydraulic shock wave generator comprising a dielectric support arranged in the container and a pair of electrodes spaced apart from each other and supported by the dielectric support. The electro-hydraulic shock wave generator further comprises a voltage pulse generator connected to the electrodes of the electro-hydraulic shock wave generator and configured to generate an electric field between the pair of electrodes of which a strength exceeds 40 kV/m, as a result of which the electro-hydraulic shock wave generator generates shock waves by discharges between the electrodes that are induced by the electric field.

Within the context of this described embodiment, an electro-hydraulic shock wave generator generates shock waves by the discharges induced by the electric field between the number of electrodes itself.

By providing a voltage pulse generator configured to generate an electric field between the two electrodes exceeding 40 kV/m, the waste water cleaning system creates shockwaves with a sufficient energy to clean the waste water.

In this described embodiment, the container of the waste water cleaning system has a symmetry line and/or apex, wherein the electrodes of the electro-hydraulic shock wave generator are positioned substantially along a symmetry line and/or in an apex of the container, such that the shockwaves clean the waste water at a distance remote from the electro-hydraulic shock wave generator.

By positioning the electrodes of the electro-hydraulic shock wave generator substantially along a symmetry line and/or in an apex of the container, the shock waves created by electric discharges are able to clean as many contaminants as possible. The symmetry line is the position in the container where the electro-hydraulic shock wave generator is surrounded by the biggest amount of waste water, and therefore is able to clean the most amount of waste water. Furthermore, the walls of the container will reflect at least part of the shock waves. When the container is shaped such that it has an apex, the apex is the most advantageous position for the electro-hydraulic shock wave generator, as the walls of the container will reflect part of the shock waves into the rest of the container.

In this described embodiment, the electric field strength is larger than 60 kV/m, and preferably larger than 80 kV/m.

By providing the abovementioned electric field strengths, the electro-hydraulic shock wave generator creates shock waves with a sufficient energy and/or speed to create the abovementioned nano-plasmas. The Applicant has found that a minimum speed a shock wave needs to have in order to create nano-plasmas at the contaminants is between Mach 3 and 4. Experiments have shown that an electric field strength above 40 kV/m achieves this result.

In this described embodiment, the container of the waste water cleaning system is cylindrically shaped and the electrodes of the electro-hydraulic shock wave generator are positioned substantially in a center of the container, wherein electric field lines corresponding to the electric field between the pair of anodes are substantially parallel to an axial symmetry line of the container.

Experiments have shown that by positioning the electrodes of the electro-hydraulic shock wave generator substantially in the center with the electric field lines substantially parallel to the axial symmetry of the container, the shock waves have sufficient freedom to move in all directions, thus cleaning waste water efficiently in all directions.

In this described embodiment, the container of the waste water cleaning system is spherically shaped and the pair of electrodes of the electro-hydraulic shock wave generator is positioned substantially in the center of the container.

By positioning the electrodes of the electro-hydraulic shock wave generator substantially in the center of the spherically shaped container, the distance from the electro-hydraulic shock wave generator to every wall is equal. Therefore, the shock wave has a long distance before it reaches the wall of the container in any possible direction, thereby cleaning waste water efficiently in any possible direction.

In this described embodiment, the container of the waste water cleaning apparatus is conically shaped and the pair electrodes of the electro-hydraulic shock wave generator is positioned substantially at an apex of the container.

By positioning the electro-hydraulic shock wave generator at the apex of the conically shaped container the shock waves are able to travel a long distance to travel through the container without hitting a wall of the container. Due to the secondary shock waves the primary shock waves will travel all the way to the end of the container. Due to the long travel-distance a large amount of contaminants is cleaned in the waste water.

In this described embodiment, the dielectric support is cylindrically shaped.

By providing a cylindrically shaped dielectric support the electrodes can be tightly secured to the support.

In this described embodiment, each electrode is sleeve-shaped around the dielectric support.

By providing sleeve-shaped electrodes the electrodes are substantially the same form as the dielectric support when the dielectric support would be cylindrically shaped. The electrodes can therefore be easily and in a tight way provided on the dielectric support, thereby reducing the chance of malfunctioning of the waste water apparatus.

In this described embodiment, each electrode is ring-shaped around the dielectric support.

By providing ring-shaped electrodes the electrodes have at least substantially the same cross section as the dielectric support when the dielectric support would be cylindrically shaped. The electrodes can therefore be easily and in a tight way provided on the dielectric support, thereby reducing the chance of malfunctioning of the waste water apparatus.

In this described embodiment, the dielectric support is hollow.

By providing a hollow dielectric support the waste water provided in the container is able to flow through the dielectric support. Due to the discharges between the electrodes there is a chance of heating of the dielectric support. This heating can be caused by heat produced in the electrodes, or due to the plasma created through the discharges. In practice the supplied waste water will be of a substantially low temperature, for example around 5-30° Celsius. When the waste water then flows through the hollow dielectric support the waste water cools the dielectric support. This prevents malfunctioning of the waste water cleaning apparatus.

In this described embodiment, a closest distance between the electrodes is in a range of 2 - 30 mm, more preferably in a range of 5 - 20 mm, and even more preferably in a range of 8 and 16 mm.

Experiments have shown that abovementioned ranges of the closest distance provide an effective shock wave creation, and thereby an effective cleaning of the contaminants in the waste water.

In this described embodiment, the closest distance between the electrodes is measured substantially parallel to the symmetry line of the container.

The electrodes will be placed supported on a dielectric support. In one embodiment the electric field lines between the electrodes when a voltage is applied to the electrodes is substantially parallel to the symmetry line of the container. The closest distance between the electrodes can then be measured substantially parallel to the symmetry line of the container.

In this described embodiment, a ratio of a distance between the electrodes and a distance of the electrode to a closest wall of the container is in the range of 20 - 200, more preferably is in the range of 50 - 150, and most preferably is in the range of 80 - 120.

By providing a ratio as described above, one obtains a waste water cleaning apparatus wherein there is a sufficient amount of waste water to be cleaned surrounding the shock wave generator. Thus an efficient waste water cleaning apparatus is obtained.

In this described embodiment, the container is substantially made of steel and/or plastic.

By making the container substantially of steel and/or plastic the container is able to withstand a substantial pressure of the waste water up to 10 bar, preferably at least to a pressure up to 5 bar.

In the last two described embodiments, pulses of the voltage pulse generator are provided at a frequency higher than 1 kHz, more preferably higher than 10 kHz, and even more preferably higher than 20 kHz.

According to the inventor the abovementioned frequencies provides a sufficiently high production of subsequent shock waves. When the frequency provided by the voltage pulse generator would be too high, the production of an earlier shock wave could be disturbed by the production of a later shock wave, or unwanted resonances could occur. However, one does want to obtain a frequency as high as possible such that the waste water cleaning apparatus cleans the contaminants as fast as possible.

In the last two described embodiments, a duty cycle of the voltage pulse generator is in a range of 20 - 80%, more preferably in a range of 30 - 70 %, and most preferably in a range of 40 - 60%.

Described is also (not being however part of the present invention) a waste water cleaning system comprising a UV-ultrasound cleaning system comprising a second inlet for receiving waste water and a second outlet for outputting waste water that has been cleaned by the UV-ultrasound cleaning system, an apparatus according to one of the last two embodiments as described above, wherein the first inlet is connected to the second outlet, an ultrafiltration system comprising a third inlet and a third outlet, wherein the third inlet is connected with the first outlet and wherein the third outlet is configured to output waste water that has been cleaned by said waste water cleaning system, and a pump for pressurizing waste water to be cleaned by the waste water cleaning system. The pump can be configured to pressurize the waste water to pressures in a range of 2.5 - 6.5 bar, more preferably in a range of 3.5 - 5.5 bar, and most preferably at a pressure in a range of 4 - 5 bar.

The pressure in the system should be sufficient to put the waste water through the ultrafiltration unit. The system as a whole combines different techniques to be able to clean contaminations of different kinds out of the waste water, for example, herbicides, pesticides and hydrocarbons.

It is apparent for the skilled person that the anode and the cathode in the last three described embodiments can also be reversed, meaning that in the last three embodiments anode can be read as cathode and cathode can be read as anode.

Further advantages, features and details of the invention are elucidated on the basis of preferred embodiments thereof, wherein reference is made to the accompanying drawings, in which:
- Figure 1 shows an embodiment according to the present invention;
- Figure 2A-D show schematic views of the process of creating shock waves at the plasma pencils in accordance with the present invention;
- Figure 3 shows an embodiment not being part of the present invention;
- Figures 4A-F show schematic views of the cleaning process of waste water with shock waves according to the embodiment of Figure 3;
- Figure 5 shows an alternative embodiment according to another embodiment not being part of the invention;
- Figure 6 shows an alternative embodiment according to another embodiment not being part of the invention;
- Figure 7 shows an alternative embodiment according to another embodiment not being part of the invention; and
- Figure 8 show an alternative schematic view of the cleaning process of waste water with shock waves according to the above non-inventive embodiment.

When in different embodiments the same element is shown, the number of the element is increased with 100.

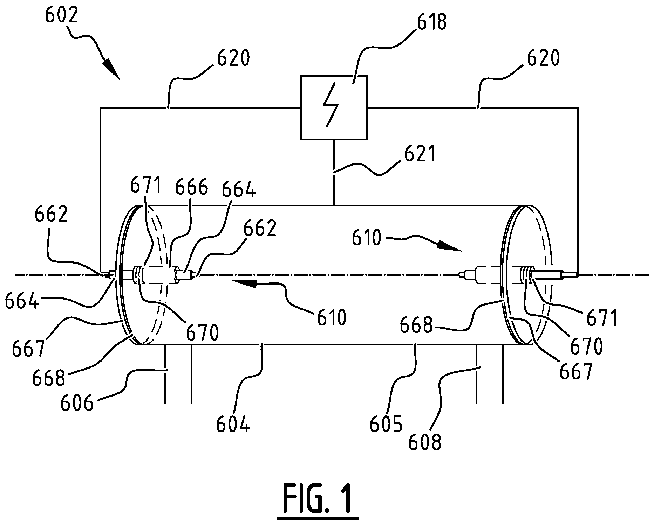

Figure 1 shows an embodiment of waste water cleaning apparatus 602. Waste water cleaning apparatus 602 comprises cylindrically shaped reactor body 604 with water inlet 606 and water outlet 608 and plasma-hydraulic shock wave generator 610. Voltage pulse generator 618 is connected with wires 620 to core 662, in this embodiment made of tungsten. Voltage pulse generator 618 is further connected with wire 621 to the outer wall of reactor body 604. Reactor body 604 comprises a hollow main part 605 that is physically and electrically connected to ends 667 which are in turn electrically connected to metallic anodic sleeve 666. Plasma pencil comprises a core 662 that functions as a cathode and a metallic sleeve 666 that functions as an anode. Metallic sleeve 666 is in the illustrated embodiment made of aluminum. Two plasma pencils are provided at both ends 667 of reactor body 604. Plasma pencils are screwed into ends 667 of reactor body 604 via threaded connection 670 which is provided in opening 671 of end 667. Plasma pencils are further positioned in the axial symmetry line of reactor body 604 Ends 667 of reactor body 604 are connected to hollow main part 605 through tri-clamps 668.

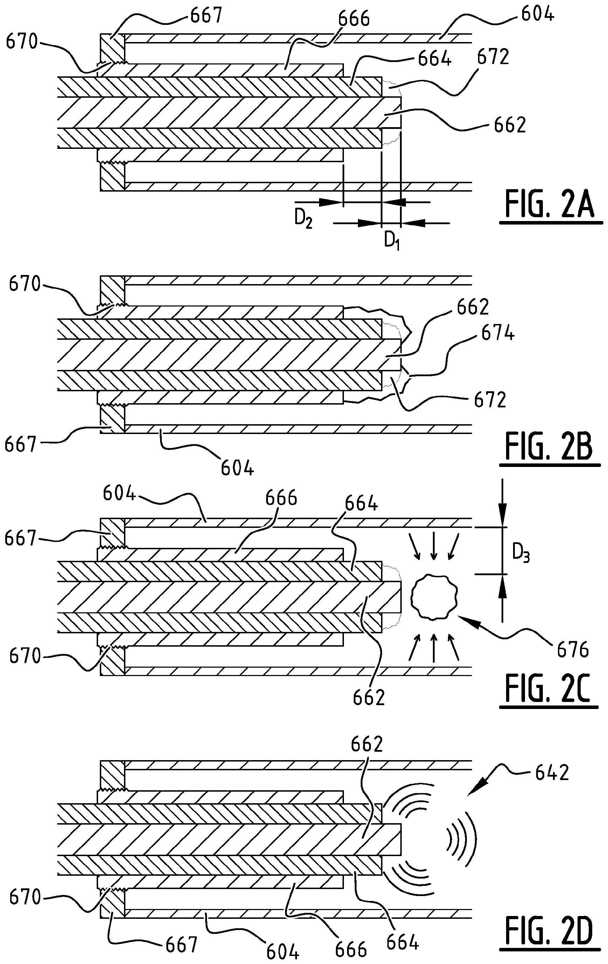

Figure 2A shows a plasma pencil in a first stage of creating shock waves. Plasma pencils comprise a tungsten core 662 around which an insulating mono-crystalline sapphire sleeve 664 is provided. Insulating sleeve 664 is set back a first distance D₁ of 5 mm to the end of core 662. Metallic sleeve 666 is provided around insulating sleeve 664. Metallic sleeve 666 is set back a second distance D₂ of 10 mm to end of insulating sleeve 664. Further shown is threaded connection 670 of metallic sleeve 666 to end 667 of reactor body 604.

When voltage pulse generator 618 provides a voltage pulse, core 662 is heated due to Joule heating. As a consequence, waste water around core 662 is heated and a water envelope 672 is created. In a second stage (figure 2B) a non-transferrable arc 674 is created from core 662 to metallic sleeve 666, thereby creating a plasmoid 676 at the tip of core 662 (figure 2C). When the pulse stops (figure 2D), plasmoid 676 implodes and creates shock waves 642, which are able to clean the waste water.

After the formation of a plasmoid, the plasmoid has a diameter of at least 2 cm. The plasmoid now acts as a conductive part of core 662 and a distance between the plasmoid and metallic sleeve 666 may be greater than a distance between the plasmoid and main hollow part 605. In this example, the diameter of the main hollow part is 45 mm, thus the effective distance D₃ between the outside of the plasmoid and the main hollow part is 12.5 mm, thereby smaller than the distance between the end of core 662 and metallic sleeve 666. Consequently, a large part of the current will pass between core 662 and main hollow part 605. This effect becomes even more pronounced given the relatively poor conductivity of metallic sleeve 666 caused by the porous oxide layer at its surface. An advantage of metallic sleeve 666 is that it mainly works for a short time from the joule heating moment until the development of the plasmoid. This also improves the lifespan of the plasma pencil.

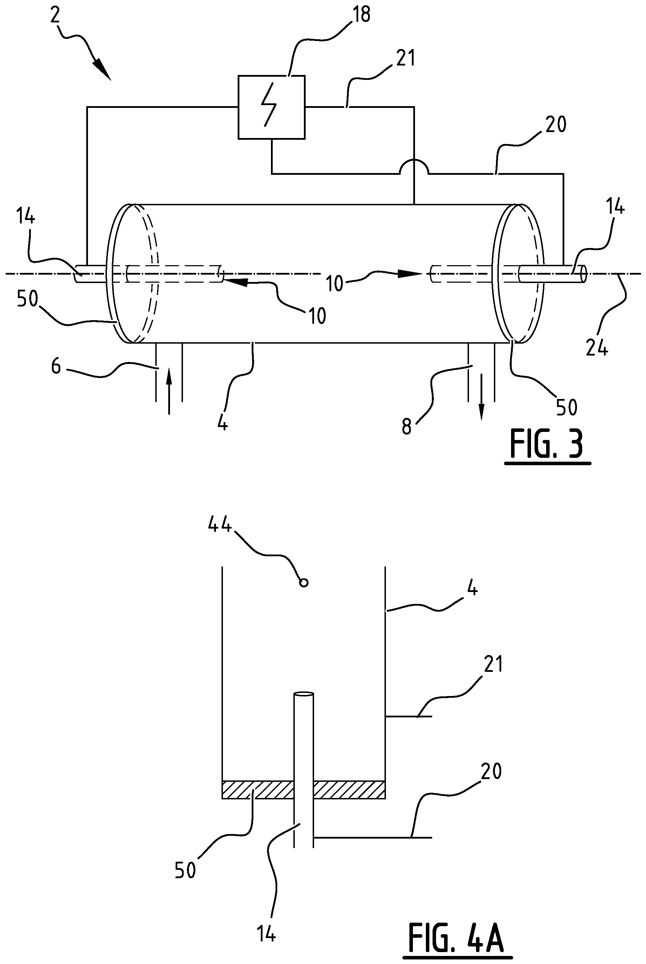

Figure 3 shows an embodiment of waste water cleaning apparatus 2 not being part of the present invention. Waste water cleaning apparatus 2 comprises cylindrically shaped container 4 with water inlet 6 and water outlet 8 and plasma-hydraulic shock wave generator 10. Voltage pulse generator 18 is connected with wires 21 to container 4 to make the conductive outer wall of container 4 the cathode. Voltage pulse generator 18 is further connected with wires 20 to two conductive anodes 14 positioned opposite of each other. Anodes 14 are substantially rod-shaped. The longitudinal axes of rod-shaped electrodes 14 stretch out parallel to the centerline or longitudinal axis 24 of container 4. Placed between anodes 14 and container 4 is insulator 50 made of aluminum oxide. Insulator 50, together with the position and shape of container 4 and anodes 14, provide that, when an electric field is generated through voltage pulse generator 18, the electric field lines stretch out radially from anodes 14 to container 4.

Next, the cleaning process of waste water with shock waves will be explained referring to figures 4A-F.

Figure 4A shows part of container 4 with insulator 50 wherein anode 14 is positioned at the start of the cleaning process. Container 4 is connected with wire 21 to the voltage pulse generator (not shown) and works as a cathode, while anode 14 is connected with wire 20 to the voltage pulse generator. In the starting situation of the cleaning process shown in figure 4A, no voltage is applied by the voltage pulse generator through wires 20/21 to electrode 14 and/or container 4. Further shown is contaminant 44 floating in the water provided in container 4.

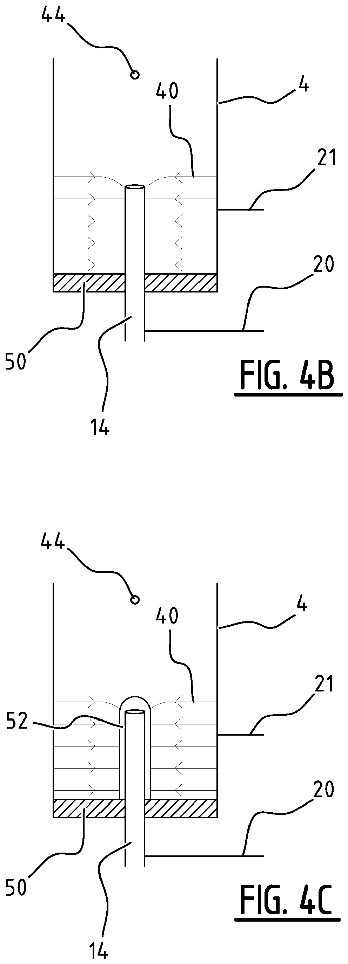

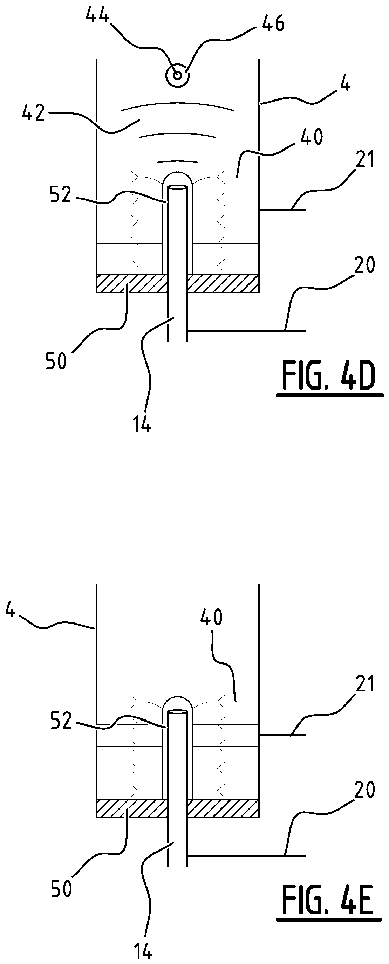

In figure 4B an electric field is applied by the voltage pulse generator. Shown are electric field lines 40, which are substantially parallel going from container 4 to anode 14. When a sufficiently high electric field strength of at least 40 kV/m is applied, and the power density in the vicinity of the anode will become more than around 200 W/cm², a vapor gaseous envelope 52 around anode 14 is created as shown in figure 4C. When the vapor gaseous envelope is created it can be induced to a plasma envelope 52 through micro-discharges, thereby creating a rapid increase in temperature which creates a shock wave 42, as shown in figure 4D. When shock wave 42 encounters contamination 44, a nano-plasma 46 is created around contamination 44. This nano-plasma comprises free radicals cleaning the contaminant.

After the creation of shock wave 42, e.g. when the voltage pulse is no longer applied, plasma envelope 52 decreases in temperature, as shown in figure 4E, or it disappears. It is re-ignited or strengthened by a next voltage pulse from voltage pulse generator 18.

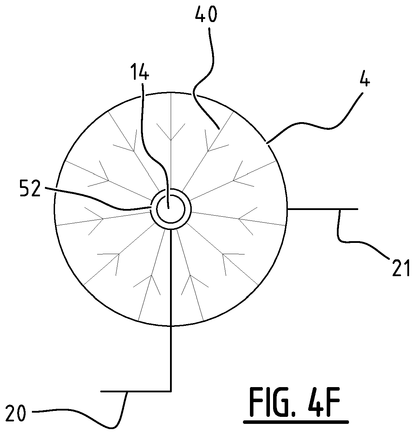

In figure 4F, a cross section of container 4 is shown. Electric field 40 stretches out from container 4 to anode 14. It can be seen that electric field 40 is denser near anode 14 than near container 4. This is due the fact that the surface area of container 4 or the outer wall thereof, is much larger than the surface area of anode 14.

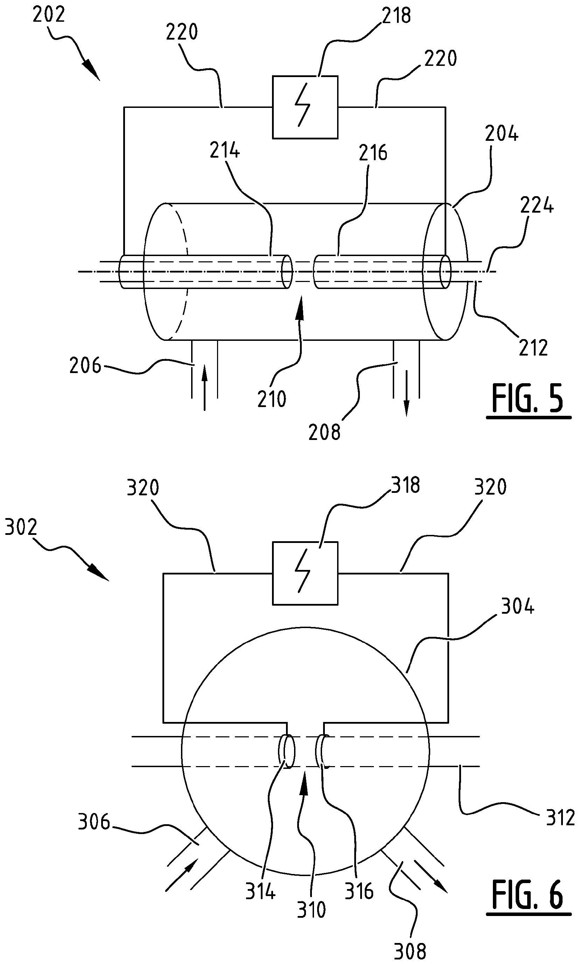

Figure 5 shows waste water cleaning apparatus 202 not being part of the present invention and comprising container 204 and electro-hydraulic shock wave generator 210 including a voltage pulse generator 218. Container 204 is provided with water inlet 206 and water outlet 208 and is cylindrically shaped. Electro-hydraulic shock wave generator 210 comprises dielectric support 212 and supported thereon are two sleeve-shaped electrodes 214, 216. Electrodes 214, 216 of electro-hydraulic shock wave generator 210 are arranged in container 204 on axial symmetry line 224. Voltage pulse generator 218 is connected to these electrodes 214, 216 with wires 220. Voltage pulse generator 210 can send a voltage pulse through wires 220 to electrodes 214, 216 such that an electric discharge between electrodes 214, 216 occurs.

Figure 6 shows waste water cleaning apparatus 302 in an alternative embodiment not being part of the present invention. Herein container 304 is spherically shaped. Furthermore electrodes 314, 316 of electro-hydraulic shock wave generator 310 are ring-shaped around dielectric support 312. Electrodes 314, 316 are connected with wires 320 to voltage pulse generator 318 included in electro-hydraulic shock wave generator 310. Electrodes 314, 316 of electro-hydraulic shock wave generator 310 are positioned in the center of container 304, such that the distance from the creation of shock wave to the walls of container 304 is substantially equal.

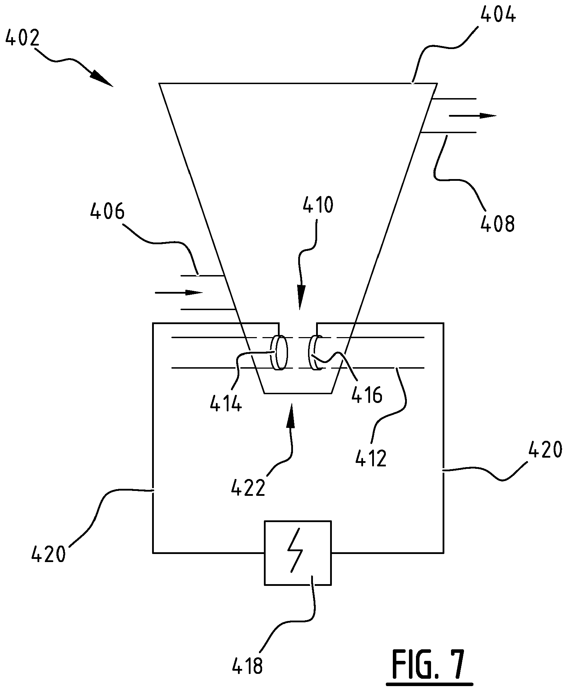

Figure 7 shows another alternative embodiment of waste water cleaning apparatus 402 not being part of the present invention. Container 404 is conically shaped, comprising water inlet 406 and water outlet 408. Ring-shaped electrodes 414, 416 of electro-hydraulic shock wave generator 410 are positioned substantially at the apex 422 of container 404. Electrodes 414, 416 are connected with wires 420 to voltage pulse generator 418.

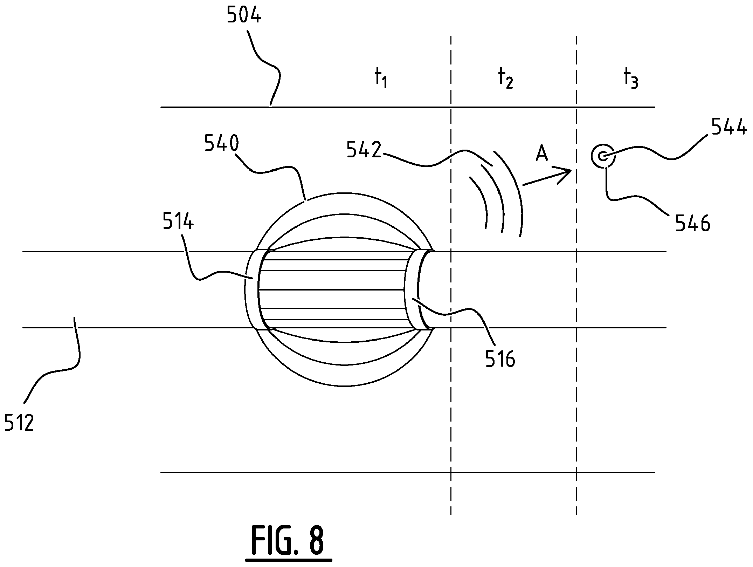

Figure 8 shows the process of cleaning waste water with shock waves. Electrodes 514, 516 are supported on dielectric support 512 and create an electric field shown as electric field lines 540. These electric field lines 540 can induce an electrical discharge, wherein a shock wave 542 is created. Here, it is noted that the generation of shock wave occurs in section t1.

In section t2, shock wave 542 travels through the waste water in direction A. During a given time interval t3, shock wave 542 encounters a contaminant 544 and thereafter creates nano-plasmas 546. Nano-plasmas 546 then create the chemical radicals which in turn react with the contaminants, thereby cleaning the waste water.

The present invention is defined by the appended claims.

## Claims

1. A waste water cleaning apparatus (602) for cleaning waste water with shock waves, comprising:
a reactor body (604) that stretches out between opposing ends (667) and comprising a first water inlet (606) and a first water outlet (608); and
a plasma-hydraulic shock wave generator (610) comprising:
a pair of plasma pencils, each plasma pencil being mounted to a respective end among said opposing ends (667) of the reactor body (604) and comprising:
an elongated core (662) configured to form a cathode of the plasma pencil;
an elongated insulating sleeve (664) that is provided coaxially around the elongated core (662); and
an elongated metallic sleeve (666) that is provided coaxially around the elongated insulating sleeve (664) and that is configured to form an anode of the plasma pencil,
wherein each plasma pencil has a tip part that is arranged inside the reactor body (604), said tip part being formed by a part of the elongated core (662) extending in longitudinal direction out of the insulating sleeve (664), and a part of the insulating sleeve (664) extending in longitudinal direction out of the metallic sleeve (666),
a voltage pulse generator (618) connected, for each plasma pencil, to the anode and to the cathode, wherein the voltage pulse generator (618) is configured to generate an electric field between the anode and the cathode having a strength exceeding 40 kV/m and wherein a power density at each cathode exceeds 4 kW/cm², wherein an exposed area of the elongated core (662) is such that the power density of at least 4 kW/cm² is achieved in use, as a result of which a plasma is created around the part of the elongated core (662) that extends out of the insulating sleeve (664), wherein the plasma generates shock waves;
wherein the elongated core (662) comprises tungsten;
wherein the insulator sleeve (664) is made of ceramic material:
wherein the metallic sleeve (666) comprises a metal that is configured to, during operation, form a self-healing porous metallic oxide layer on its surface, wherein the metallic sleeve (666) comprises aluminum and/or titanium;
wherein the insulating sleeve (664) is set back from the core (662) and the metallic sleeve (666) is set back from the insulating sleeve (664).

2. The waste water cleaning apparatus according to claim 1, wherein the plasma pencils are removably attached to the ends of the reactor body (604).

3. The waste water cleaning apparatus according to claim 2, wherein each end (667) of the reactor body (604) is provided with an opening (671) through which a respective plasma pencil extends.

4. The waste water cleaning apparatus according to claim 3, wherein for each plasma pencil:
the metallic sleeve (666) comprises an outer thread, wherein the opening (671) of the end (667) of the reactor body (604) to which the plasma pencil is mounted is provided with an inner thread, and wherein the plasma pencil is removably attached to the reactor body by means of the outer thread cooperating with the inner thread.

5. The waste water cleaning apparatus according to any one of the foregoing claims, wherein the ends (667) of the reactor body are removably attached to a remainder of the reactor body (604), preferably with a tri-clamp (668).

6. The waste water cleaning apparatus according to any one of the foregoing claims, wherein the insulator sleeve (664) is made of mono-crystalline sapphire.

7. The waste water cleaning apparatus according to any one of the foregoing claims, wherein a first distance along which the elongated core (662) extends out of the insulating sleeve (664) is in the range of 0.1 - 4 cm, preferably in the range of 0.3 - 2 cm, and most preferably in the range of 0.5 - 1 cm, and/or wherein a second distance along which the insulating sleeve extends out of the metallic sleeve (666) is in the range of 0.1 - 4 cm, preferably in the range of 0.3 - 2 cm, and most preferably in the range of 0.5 - 1 cm.

8. The waste water cleaning apparatus according to any one of the foregoing claims, wherein pulses of the voltage pulse generator (618) are provided at a frequency such that a ratio between a speed of the shock waves to the product of the frequency and a distance between the plasma pencils lies in a range between 0.1 and 1, more preferably between 0.2 and 0.7, and most preferably between 0.3 and 0.5.

9. The waste water cleaning apparatus according to any one of the foregoing claims, wherein the reactor body (604) is electrically connected to the elongated metallic sleeve (666), and/or
wherein the electric field strength is larger than 60 kV/m, preferably larger than 80 kV/m, and/or
wherein the power density at each anode exceeds 6 kW/cm², and preferably exceeds 8 kW/cm².

10. The waste water cleaning apparatus according to any one of the foregoing claims,
wherein the reactor body (604) has a symmetry line, and wherein each plasma pencil is positioned substantially along the symmetry line of the reactor body, and/or
wherein each elongated core (662) has an elongated shape, preferably a cylindrical shape, such as a rod shape.

11. The waste water cleaning apparatus according to claim 10, wherein the plasma pencils are arranged in the reactor body (604) such that, for each plasma pencil, its longitudinal axis is parallel to and preferably coincides with said symmetry line of the reactor body.

12. The waste water cleaning apparatus according to any one of the foregoing claims, wherein the reactor body has an elongated hollow main part (605) and wherein the ends (667) close off the elongated main part at opposing ends thereof, wherein preferably the elongated hollow main part is cylindrically shaped.

13. The waste water cleaning apparatus according to any of the previous claims,
wherein the reactor body (604) is substantially made of stainless steel and/or plastic, and/or
wherein pulses of the voltage pulse generator (618) are provided at a frequency higher than 250 Hz, more preferably higher than 1 kHz, and even more preferably higher than 5 kHz, and/or
wherein a duty cycle of the voltage pulse generator is in a range of 20 - 80%, more preferably in a range of 30 - 70%, and most preferably in a range of 40 - 60%.

14. Plasma pencil that is configured to be used in a waste water cleaning apparatus (602) according to any one of the foregoing claims, comprising:
an elongated core (662) configured to form a cathode of the plasma pencil,
an elongated insulating sleeve (664) that is provided coaxially around the elongated core; and
an elongated metallic sleeve (666) that is provided coaxially around the elongated insulating sleeve and that is configured to form an anode of the plasma pencil;
wherein each plasma pencil has a tip part that is arranged inside the reactor body (604), said tip part being formed by a part of the elongated core extending in longitudinal direction out of the insulating sleeve, and a part of the insulating sleeve extending in longitudinal direction out of the metallic sleeve, wherein an exposed area of the elongated core is such that the power density of at least 4 kW/cm² is achieved in use,
wherein the elongated core comprises tungsten;
wherein the insulator sleeve is made of ceramic material;
wherein the metallic sleeve comprises a metal that is configured, during operation, to form a self-healing porous metallic oxide layer on its surface, wherein the metallic sleeve comprises aluminum and/or titanium;
wherein the insulating sleeve is set back from the core and the metallic sleeve is set back from the insulating sleeve.

15. A waste water cleaning system, comprising:
a waste water cleaning apparatus (602) according to any of the claims 1-13;
a nano-filtration system comprising a second water inlet and a second water outlet, wherein the second water inlet is connected with the first water outlet and wherein the second water outlet is configured to output waste water that has been cleaned by said waste water cleaning system; and
a pump for pressurizing the waste water to be cleaned by the waste water cleaning system at a pressure in a range of 2.5 - 6.5 bar, more preferably in a range of 3.5 - 5.5 bar, and most preferably at a pressure in a range of 4 - 5 bar.

## Patentansprüche

1. Eine Abwasserreinigungsvorrichtung (602) zur Reinigung von Abwasser mit Stoßwellen, aufweisend:
einen Reaktorkörper (604), der sich zwischen gegenüberliegenden Enden (667) erstreckt und einen ersten Wassereinlass (606) und einen ersten Wasserauslass (608) aufweist; und
einen plasmahydraulischen Stoßwellengenerator (610), der Folgendes aufweist:
ein Paar Plasmastifte, wobei jeder Plasmastift an einem jeweiligen Ende der gegenüberliegenden Enden (667) des Reaktorkörpers (604) angebracht ist und Folgendes umfasst:
einen langgestreckten Kern (662), der so ausgebildet ist, dass er eine Kathode des Plasmastifts bildet;
eine langgestreckte isolierende Hülse (664), die koaxial um den langgestreckten Kern (662) herum vorgesehen ist; und
eine langgestreckte metallische Hülse (666), die koaxial um die langgestreckte isolierende Hülse (664) vorgesehen ist, und die so ausgebildet ist, dass sie eine Anode des Plasmastifts bildet, wobei jeder Plasmastift einen innerhalb des Reaktorkörpers (604) angeordneten Kopfteil aufweist, wobei der Kopfteil durch einen in Längsrichtung aus der isolierenden Hülse (664) herausragenden Teil des langgestreckten Kerns (662) gebildet wird, sowie durch einen in Längsrichtung aus
der metallischen Hülse (666) herausragenden Teil der isolierenden Hülse (664),
einen Spannungs-Impulsgenerator (618), der für jeden Plasmastift mit der Anode und der Kathode verbunden ist, wobei der Spannungs-Impulsgenerator (618) so ausgebildet ist, dass er zwischen der Anode und der Kathode ein elektrisches Feld mit einer Stärke von mehr als 40 kV/m erzeugt, wobei eine Leistungsdichte an jeder Kathode 4 kW/cm² übersteigt,
wobei eine freiliegende Fläche des langgestreckten Kerns (662) so beschaffen ist, dass im Betrieb eine Leistungsdichte von mindestens 4 kW/cm² erreicht wird, wodurch um den aus der isolierenden Hülse (664) herausragenden Teil des langgestreckten Kerns (662) ein Plasma erzeugt wird,
wobei das Plasma Stoßwellen erzeugt;
wobei der langgestreckte Kern (662) Wolfram aufweist;
wobei die isolierende Hülse (664) aus keramischem Material gefertigt ist;
wobei die metallische Hülse (666) aus einem Metall besteht, das so ausgebildet ist, dass es im Betrieb eine selbstregenerative poröse Metalloxidschicht auf seiner Oberfläche bildet, wobei die metallische Hülse (666) Aluminium und/oder Titan aufweist,
wobei die isolierende Hülse (664) gegenüber dem Kern (662) zurückgesetzt ist, und die metallische Hülse (666) gegenüber der isolierenden Hülse (664) zurückgesetzt ist.

2. Die Abwasserreinigungsvorrichtung nach Anspruch 1, wobei die Plasmastifte an den Enden des Reaktorkörpers (604) abnehmbar befestigt sind.

3. Die Abwasserreinigungsvorrichtung nach Anspruch 2, wobei jedes Ende des Reaktorkörpers (604) mit einer Öffnung (671) versehen ist, durch die sich ein entsprechender Plasmastift erstreckt.

4. Die Abwasserreinigungsvorrichtung nach Anspruch 3, wobei bei jedem Plasmastift
die metallische Hülse (666) ein Außengewinde aufweist, wobei die Öffnung (671) des Endes (667) des Reaktorkörpers (604), an dem der Plasmastift befestigt ist, mit einem Innengewinde versehen ist, und wobei der Plasmastift mittels des mit dem Innengewinde zusammenwirkenden Außengewindes am Reaktorkörper lösbar befestigt ist.

5. Die Abwasserreinigungsvorrichtung nach einem der vorherigen Ansprüche,
wobei die Enden (667) des Reaktorkörpers an einem verbleibenden Teil des Reaktorkörpers (604) lösbar, vorzugsweise mit einer Tri-Clamp-Verbindung (668), befestigt sind.

6. Die Abwasserreinigungsvorrichtung nach einem der vorherigen Ansprüche,
wobei die isolierende Hülse (664) aus monokristallinem Saphir gefertigt ist.

7. Die Abwasserreinigungsvorrichtung nach einem der vorherigen Ansprüche,
wobei ein erster Abstand, entlang dessen der langgestreckte Kern (662) aus der isolierenden Hülse (664) herausragt, im Bereich von 0,1 bis 4 cm, vorzugsweise im Bereich von 0,3 bis 2 cm und am meisten bevorzugt im Bereich von 0,5 bis 1 cm liegt, und/oder wobei ein zweiter Abstand, entlang dessen die isolierende Hülse aus der metallischen Hülse (666) herausragt, im Bereich von 0,1 bis 4 cm, vorzugsweise im Bereich von 0,3 bis 2 cm und am meisten bevorzugt im Bereich von 0,5 bis 1 cm liegt.

8. Die Abwasserreinigungsvorrichtung nach einem der vorherigen Ansprüche,
wobei die Impulse des Spannungs-Impulsgenerators (618) mit einer solchen Frequenz abgegeben werden, dass ein Verhältnis zwischen einer Geschwindigkeit der Stoßwellen und dem Produkt aus der Frequenz und einem Abstand zwischen den Plasmastiften in einem Bereich zwischen 0,1 und 1, bevorzugter zwischen 0,2 und 0,7 und am meisten bevorzugt zwischen 0,3 und 0,5 liegt.

9. Die Abwasserreinigungsvorrichtung nach einem der vorherigen Ansprüche,
wobei der Reaktorkörper (604) mit der langgestreckten metallischen Hülse (666) elektrisch verbunden ist, und/oder
wobei die elektrische Feldstärke größer als 60 kV/m, vorzugsweise größer als 80 kV/m ist, und/oder
wobei die Leistungsdichte an jeder Anode größer als 6 kW/cm², vorzugsweise größer als 8 kW/cm² ist.

10. Die Abwasserreinigungsvorrichtung nach einem der vorherigen Ansprüche,
wobei der Reaktorkörper (604) eine Symmetrielinie aufweist, und wobei jeder Plasmastift im Wesentlichen entlang der Symmetrielinie des Reaktorkörpers angeordnet ist, und/oder
wobei jeder langgestreckte Kern (662) eine langgestreckte Form, vorzugsweise eine zylindrische Form, wie beispielsweise die Form eines Stabes, aufweist.

11. Die Abwasserreinigungsvorrichtung nach Anspruch 10, wobei die Plasmastifte im Reaktorkörper (604) so angeordnet sind, dass die Längsachse jedes Plasmastifts parallel zu der Symmetrielinie des Reaktorkörpers verläuft und vorzugsweise mit dieser zusammenfällt.

12. Die Abwasserreinigungsvorrichtung nach einem der vorherigen Ansprüche,
wobei der Reaktorkörper ein langgestrecktes hohles Hauptteil (605) aufweist,
und wobei die Enden (667) das langgestreckte Hauptteil an gegenüberliegenden Enden desselben abschließen, wobei das langgestreckte hohle Hauptteil vorzugsweise zylindrisch geformt ist.

13. Die Abwasserreinigungsvorrichtung nach einem der vorherigen Ansprüche,
wobei der Reaktorkörper (604) im Wesentlichen aus rostfreiem Stahl und/oder Kunststoff gefertigt ist, und/oder
wobei die Impulse des Spannungs-Impulsgenerators (618) mit einer Frequenz von mehr als 250 Hz, bevorzugter von mehr als 1 kHz und noch bevorzugter von mehr als 5 kHz abgegeben werden, und/oder
wobei der Aussteuergrad des Spannungs-Impulsgenerators in einem Bereich von 20 bis 80 %, bevorzugter in einem Bereich von 30 bis 70 % und am meisten bevorzugt in einem Bereich von 40 bis 60 % liegt.

14. Plasmastift, der zur Verwendung in einer Abwasserreinigungsvorrichtung (602) nach einem der vorherigen Ansprüche ausgebildet ist, aufweisend:
einen langgestreckten Kern (662), der so ausgebildet ist, dass er eine Kathode des Plasmastifts bildet;
eine langgestreckte isolierende Hülse (664), die koaxial um den langgestreckten Kern herum vorgesehen ist; und
eine langgestreckte metallische Hülse (666), die koaxial um die langgestreckte isolierende Hülse herum vorgesehen ist, und die so ausgebildet ist, dass sie eine Anode des Plasmastifts bildet;
wobei jeder Plasmastift einen innerhalb des Reaktorkörpers (604) angeordneten Kopfteil aufweist,
wobei der Kopfteil durch einen in Längsrichtung aus der isolierenden Hülse herausragenden Teil des langgestreckten Kerns und einen in Längsrichtung aus der metallischen Hülse herausragenden Teil der isolierenden Hülse gebildet wird, wobei eine freiliegende Fläche des langgestreckten Kerns so beschaffen ist, dass im Betrieb eine Leistungsdichte von mindestens 4 kW/cm² erreicht wird,
wobei der langgestreckte Kern Wolfram aufweist;
wobei die isolierende Hülse aus keramischem Material gefertigt ist;
wobei die metallische Hülse ein Metall aufweist, welches so ausgebildet ist, dass es im Betrieb eine selbstregenerative poröse Metalloxidschicht auf seiner Oberfläche bildet, wobei die metallische Hülse Aluminium und/oder Titan aufweist,
wobei die isolierende Hülse gegenüber dem Kern zurückgesetzt ist und die metallische Hülse gegenüber der isolierenden Hülse zurückgesetzt ist.

15. Ein Abwasserreinigungssystem, aufweisend:
eine Abwasserreinigungsvorrichtung (602) nach einem der Ansprüche 1 bis 13;
ein Nanofiltrationssystem mit einem zweiten Wassereinlass und einem zweiten Wasserauslass,
wobei der zweite Wassereinlass mit dem ersten Wasserauslass verbunden ist, und wobei der zweite Wasserauslass so ausgebildet ist, dass er Abwasser ausgibt, welches durch das Abwasserreinigungssystem gereinigt worden ist; und
eine Pumpe zur Druckbeaufschlagung des durch das Abwasserreinigungssystem zu reinigenden Abwassers mit einem Druck in einem Bereich von 2,5 bis 6,5 bar, bevorzugter in einem Bereich von 3,5 bis 5,5 bar und am meisten bevorzugt mit einem Druck in einem Bereich von 4 bis 5 bar.

## Revendications

1. Dispositif de nettoyage d'eaux usées (602) destiné à nettoyer des eaux usées avec des ondes de choc, comprenant :
un corps de réacteur (604) qui s'étend entre des extrémités opposées (667) et comprenant un premier orifice d'entrée d'eau (606) et un premier orifice de sortie d'eau (608) ; et
un générateur d'onde de choc hydraulique à plasma (610) comprenant :
une paire de crayons à plasma, chaque crayon à plasma étant monté à une extrémité respective desdites extrémités opposées (667) du corps de réacteur (604) et comprenant :
un noyau allongé (662) configuré de manière à former une cathode du crayon à plasma ;
un manchon isolant allongé (664) qui est agencé coaxialement autour du noyau allongé (662) ; et
un manchon métallique allongé (666) qui est agencé coaxialement autour du manchon isolant allongé (664) et qui est configuré de manière à former une anode du crayon à plasma.
dans lequel chaque crayon à plasma comporte une partie en pointe qui est agencée à l'intérieur du corps de réacteur (604), ladite partie en pointe étant formée par une partie du noyau allongé (662) s'étendant dans la direction longitudinale, hors du manchon isolant (664), et une partie du manchon isolant (664) s'étendant dans la direction longitudinale, hors du manchon métallique (666),
un générateur d'impulsion de tension (618) raccordé, pour chaque crayon à plasma, à l'anode et à la cathode, dans lequel le générateur d'impulsion de tension (618) est configuré de manière à produire un champ électrique entre l'anode et la cathode, présentant une intensité excédant 40 kV/m et dans lequel une densité de puissance au niveau de chaque cathode excède 4 kW/cm2,
dans lequel une zone exposée du noyau allongé (662) est telle que la densité de puissance d'au moins 4 kW/cm2 est atteinte en utilisation, en résultat de quoi un plasma est créé autour de la partie du noyau allongé (662) qui s'étend hors du manchon isolant (664), dans lequel le plasma produit des ondes de choc ;
dans lequel le noyau allongé (662) comprend du tungstène ;
dans lequel le manchon isolant (664) est réalisé en un matériau céramique ;
dans lequel le manchon métallique (666) comprend un métal qui est configuré de manière à, au cours du fonctionnement, former une couche d'oxyde métallique poreuse auto-réparatrice sur sa surface, dans lequel le manchon métallique (666) comprend de l'aluminium et/ou du titane ;
dans lequel le manchon isolant (664) est retiré par rapport au noyau (662) et le manchon métallique (666) est retiré par rapport au manchon isolant (664).

2. Dispositif de nettoyage d'eaux usées selon la revendication 1, dans lequel les crayons à plasma sont fixés de manière démontable sur les extrémités du corps de réacteur (604).

3. Dispositif de nettoyage d'eaux usées selon la revendication 2, dans lequel chaque extrémité (667) du corps de réacteur (604) comporte une ouverture (671) à travers laquelle s'étend un crayon à plasma respectif.

4. Dispositif de nettoyage d'eaux usées selon la revendication 3, dans lequel, pour chaque crayon à plasma :
le manchon métallique (666) comprend un filetage externe, dans lequel l'ouverture (671) de l'extrémité (667) du corps de réacteur (604) sur laquelle le crayon à plasma est monté comporte un filetage interne, et dans lequel le crayon à plasma est fixé de manière démontable sur le corps de réacteur au moyen du filetage externe coopérant avec le filetage interne.

5. Dispositif de nettoyage d'eaux usées selon l'une quelconque des revendications précédentes, dans lequel les extrémités (667) du corps de réacteur sont fixées de manière démontable sur une partie restante du corps de réacteur (604), de préférence, avec une triple pince (668).

6. Dispositif de nettoyage d'eaux usées selon l'une quelconque des revendications précédentes, dans lequel le manchon isolant (664) est réalisé à base de saphir monocristallin.

7. Dispositif de nettoyage d'eaux usées selon l'une quelconque des revendications précédentes, dans lequel une première distance le long de laquelle s'étend le noyau allongé (662) hors du manchon isolant (664) est comprise dans la plage de 0,1 à 4 cm, de préférence, dans la plage 0,3 à 2 cm, et plus préférablement, dans la plage de 0,5 à 1 cm, et/ou dans lequel une seconde distance le long de laquelle s'étend le manchon isolant hors du manchon métallique (666) est comprise dans la plage de 0,1 à 4 cm, de préférence, dans la plage 0,3 à 2 cm, et le plus préférablement, dans la plage de 0,5 à 1 cm.

8. Dispositif de nettoyage d'eaux usées selon l'une quelconque des revendications précédentes, dans lequel les impulsions du générateur d'impulsion de tension (618) sont délivrées à une fréquence telle qu'un rapport entre une vitesse des ondes de choc sur le produit de la fréquence et d'une distance entre les crayons à plasma est compris dans une plage entre 0,1 et 1, plus préférablement, entre 0,2 et 0,7 et le plus préférablement, entre 0,3 et 0,5.

9. Dispositif de nettoyage d'eaux usées selon l'une quelconque des revendications précédentes, dans lequel le corps de réacteur (604) est raccordé électriquement au manchon métallique allongé (666), et/ou
dans lequel l'intensité de champ électrique est supérieure à 60 kV/m, de préférence, supérieure à 80 kV/m, et/ou
dans lequel la densité de puissance à chaque anode excède 6 kW/cm2, et, de préférence, excède 8 kW/cm2.

10. Dispositif de nettoyage d'eaux usées selon l'une quelconque des revendications précédentes, dans lequel le corps de réacteur (604) présente un axe de symétrie, et dans lequel chaque crayon à plasma est positionné sensiblement le long de l'axe de symétrie du corps de réacteur, et/ou
dans lequel chaque noyau allongé (662) présente une forme allongé, de préférence, une forme cylindrique, telle qu'une forme en tige.

11. Dispositif de nettoyage d'eaux usées selon la revendication 10, dans lequel les crayons à plasma sont agencés sur le corps de réacteur (604) de telle sorte que, pour chaque crayon à plasma, son axe longitudinal est parallèle audit axe de symétrie du corps de réacteur et, de préférence, coïncide avec ce dernier.

12. Dispositif de nettoyage d'eaux usées selon l'une quelconque des revendications précédentes, dans lequel le corps de réacteur comporte une partie principale creuse allongée (605) et dans lequel les extrémités (667) referment la partie principale allongée au niveau de ses extrémités opposées, dans lequel, de préférence, la partie principale creuse allongée est de forme cylindrique.

13. Dispositif de nettoyage d'eaux usées selon l'une quelconque des revendications précédentes, dans lequel le corps de réacteur (604) est principalement réalisé à base d'acier inoxydable et/ou de matière plastique, et/ou
dans lequel des impulsions du générateur d'impulsion de tension (618) sont délivrées à une fréquence supérieure à 250 hertz, plus préférablement, supérieure à 1 kHz, et encore plus préférablement, supérieure à 5 kHz, et/ou
dans lequel un cycle utile du générateur d'impulsion de tension est compris dans une plage 20 à 80%, plus préférablement, dans une plage de 30 à 70%, et le plus préférablement, dans une plage de 40 à 60%.

14. Crayon à plasma qui est configuré de manière à être utilisé dans un dispositif de nettoyage d'eaux usées (602) selon l'une quelconque des revendications précédentes, comprenant :
un noyau allongé (662) configuré de manière à former une cathode du crayon à plasma :
un manchon isolant allongé (664) qui est agencé coaxialement autour du noyau allongé ; et
un manchon métallique allongé (666) qui est agencé coaxialement autour du manchon isolant allongé et qui est configuré de manière à former une anode du crayon à plasma ;
dans lequel chaque crayon à plasma comporte une partie en pointe qui est agencée à l'intérieur du corps de réacteur (604), ladite partie en pointe étant formée par une partie du noyau allongé s'étendant dans la direction longitudinale, hors du manchon isolant, et une partie du manchon isolant s'étendant dans la direction longitudinale, hors du manchon métallique, dans lequel une zone exposée du noyau allongé est telle que la densité de puissance d'au moins 4 kW/cm2 est atteinte en utilisation,
dans lequel le noyau allongé comprend du tungstène ;
dans lequel le manchon isolant est réalisé en un matériau céramique ;
dans lequel le manchon métallique comprend un métal qui est configuré de manière à, au cours du fonctionnement, former une couche d'oxyde métallique poreuse auto-réparatrice sur sa surface, dans lequel le manchon métallique comprend de l'aluminium et/ou du titane ;
dans lequel le manchon isolant est retiré par rapport au noyau et le manchon métallique est retiré par rapport au manchon isolant.

15. Ensemble de nettoyage d'eaux usées, comprenant :
un dispositif de nettoyage d'eaux usées (602) selon l'une quelconque des revendications 1 à 13 ;
un dispositif de nanofiltration comprenant un second orifice d'entrée d'eau et un second orifice de sortie d'eau, dans lequel le second orifice d'entrée d'eau est raccordé au premier orifice de sortie d'eau et dans lequel le second orifice de sortie d'eau est configuré de manière à délivrer les eaux usées qui ont été nettoyées par ledit dispositif de nettoyage d'eaux usées ; et
une pompe destinée à pressuriser les eaux usées à nettoyer par le dispositif de nettoyage d'eaux usées à une pression comprise dans une plage de 2,5 à 6,5 bars, plus préférablement, dans une plage de 3,5 à 5,5 bars et le plus préférablement, à une pression dans une plage de 4 à 5 bars.
